# EUROPEAN PATENT APPLICATION

(11) **EP 4 332 782 A1**
(43) Date of publication of application: **06.03.2024**
(21) Application number: 22193922.6
(22) Date of filing: 05.09.2022
(51) Int. Cl.: G06F 13/28

(54) **DETERMINISTIC MEMORY-TO-MEMORY PCIE TRANSFER**

(71) Applicant: TTTech Auto AG, 1040 Wien (AT)
(72) Inventor: ZWIRCHMAYR, Jakob, 1120 Wien (AT); UNHOLD, Christian, 1120 Wien (AT)
(74) Representative: Burger, Hannes

(57) **Abstract**

It is provided a method and devices for providing deterministic memory-to-memory transfer of information via a PCIe bus connecting one or more client devices and at least one coordinator device. Transmission requests are obtained at the coordinator device from all connected client devices. Then a transmission sequence is planned by the coordinator device and transmitted to a direct-memory-access engine. The engine fulfils the requests by performing the data transfer. After that, an acknowledgment is sent from the direct-memory-access engine to the coordinator device, and the coordinator device informs the respective client devices of the fulfilment of the corresponding transmission requests. Other aspects refer to devices and a computer program product.

## Description

### BACKGROUND OF THE INVENTION

The present invention refers to providing deterministic transfer of information from one memory to another memory via a PCIe bus, wherein the PCIe bus is connecting one or more client devices and at least one coordinator device. The coordinator device has full control over the usage of the PCIe bus.

A peripheral component interconnect express bus, also known as a PCIe bus, is a computer part that, for example, allows a PCIe peripheral to plug into, and communicate with, a motherboard. PCIe itself is an updated version of older peripheral component interconnect (PCI) technology, which, in principle, allows data to flow between a peripheral and a motherboard. A PCIe bus can handle a much faster transfer of data than older PCI buses, which typically translates to better graphics or network connections, if the component that is connected via PCIe is a graphics adapter or a (ethernet) network interface, respectively. Other peripheral devices that can use PCIe for data transfer include sound cards, wireless (Wi-Fi) adapters, Bluetooth connectors, video capture devices, SATA expansion and RAID controllers, TV tuner cards and others.

PCIe provides lower latency and higher data transfer rates than parallel busses such as PCI and PCI-X. Every device that's connected with a PCIe link has its own dedicated point-to-point connection. This means that devices are not competing for bandwidth because they are not sharing the same bus.

In PCIe, data is transferred over two signal pairs: two wires for transmitting and two wires for receiving. Each set of signal pairs is called a lane, and each lane is capable of sending and receiving eight-bit data packets simultaneously between two points.

PCIe can scale from 1 to 32 separate lanes, whereas the most common numbers of lanes are 1, 4, 8 and 16. The more lanes a PCIe has the higher its performance is, but also its price.

PCIe bus slots are typically backward compatible with other PCIe bus slots, allowing PCIe links that use fewer lanes to use the same interface as PCIe links that use more lanes.

PCIe in its basic embodiment does not allow host-to-host communication. In order to enable host-to-host communication further modifications are required. An example for such a modification is non-transparent bridging.

However, communication between multiple devices, like hosts and/or peripherals, via common PCIe technology is non-deterministic. Generally, PCIe allows the direct transfer of data from the memory of device A to the memory of device B. This is called direct memory access (DMA). In situations where more than two devices want to communicate with each other via direct memory transfers over a PCIe switch, the PCIe switch becomes a shared communication resource that may permit only a subset of devices (possibly only one) to communicate at the same time.

Thus, in these situations the direct memory transfers of some of the devices may be delayed in an unpredictable manner. Consequently, the communication via PCIe becomes non-deterministic and, in particular, the real-time performance of the direct memory transfers cannot be guaranteed.

PCIe specifies some low-level mechanisms like Time Division Multiple Access (TDMA), which is a digital modulation technique used in digital cellular telephone and mobile radio communication. TDMA is one of two ways to divide the limited spectrum available over a radio frequency (RF) cellular channel. The other is known as frequency division multiple access (FDMA). TDMA can also be applied to the PCIe.

TDMA enables multiple users to share the same resources by dividing each resource into different time slots. In effect, a single resource, like a lane, supports multiple and simultaneous data channels. So, with a two-time slot TDMA, two devices can share the same lane. With a three-time slot TDMA, three devices can share the same resource and so on. However, the transmission speed is correspondingly reduced.

US 2015/143316 A1 describes partitioning a design across a plurality of programmable logic devices such as Field Programmable Gate Arrays (FPGAs). The systems include SerDes (SERializer DESerializer) interfaces, such as PCIe, in the programmable logic devices operably connecting logic blocks of the design. It is further disclosed that a bridge in each programmable logic device can provide synchronization and deterministic latency of packets sent between the programmable devices. The document describes a mechanism that allows to distribute a circuit design onto multiple FPGAs for prototyping and verification purposes. During operation, all packets are delayed at the receiver, and only released after a time greater than (a measured) max flight time has passed. This way, variations in actual flight time are masked. The described method relies on hardware timestamping and a shared clock.

US 2011/243211 A1 describes deterministic behavior for an interface that fixes variation in latency associated with receiver and transmitter data stream for testing of integrated devices, system on chips, and computers. The interface is described as a serial interface that is PCIe compliant and corrects latency variations in the receiver that consequently results in deterministic transmit data. Consequently, the data received and/or transmitted is predictable with respect to time and facilitates testing and validation of the devices and logic associated with the interface. The document describes variable-length buffer chains and ways to insert and remove symbols at appropriate times to achieve a deterministic data stream, compensating for variances in the receiving circuitry. The purpose is to facilitate testing and validation of devices incorporating PCIe interfaces.

Disadvantageous with the known prior art is that the described subject-matter result is a lack of determinism, safety, and reliability of the system.

### SUMMARY OF THE INVENTION

The object of the present invention is to provide an improved method and system for establishing communication determinism, or at least to provide an alternative to existing solutions.

The present invention solves this object by providing a method and devices according to the independent claims. Further advantageous features are set out in the dependent claims.

The inventive subject-matter achieves an overall communication and arbitration scheme for a system comprised of multiple PCIe devices that among other things leads to increased determinism, safety, and reliability of the system, and minimizes interference on a PCIe switch by classification and/or arbitration of traffic.

One aspect of the present invention refers to a computer-implemented method for providing deterministic transfer of information from one memory to another memory via a PCIe bus. Therein the PCIe bus is connecting one or more client devices and at least one coordinator device. The coordinator device has full control over the usage of the PCIe bus. The method is performed repeatedly and has the following steps.

First, transmission requests are obtained at and by the coordinator device from all connected client devices. A transmission request in this regard is a request of one of the client devices to transfer data to another client device or the coordinator device.

Then a transmission sequence is planned by the coordinator device based on one or more the obtained transmission requests and static configuration information. The transmission sequence indicates an order in which the transmission requests of the clients are to be fulfilled. Static configuration information in the context of this document refers to information of predetermined constraints that indicate to a specific software application, a certain time triggered setup or a rate-constraint configuration.

A rate-constraint for example defines how much data can be transferred in relation to a measurement of time or during a predefined time frame, interval, or window. The constraint can for example refer to a certain type of data transfer only. During the pertinent time phase, all transfers of the type would be added until the maximum for the time phase is reached, whereafter no more transfers of the type are permitted. Similar constraints can be based on certain clients, connections between certain clients, or other criteria.

After that the transmission sequence and the transmission requests of the transmission sequence are transmitted from the coordinator device to a direct-memory-access engine. A DMA engine actually transfers data from one memory to another. In that, a DMA engine executes the data transmissions that are requested in the transmission requests.

As the next step, each of the transmission requests is fulfilled in the order of the transmission sequence by performing the corresponding data transfer by memory-to-memory transmission by the direct-memory-access engine, accessing the memories of the source and target devices of the data transfers. This relates to the DMA engines execution of a requested transmission.

After that an acknowledgment is sent by the direct-memory-access engine to the coordinator device, the acknowledgement indicating that the transmission requests of the transmission sequence have been fulfilled.

Finally, the coordinator device informs the respective client devices of the fulfilment of the corresponding transmission requests.

By performing these steps of the method repeatedly, communication determinism is established.

According to one embodiment, planning the transmission sequence comprises modifying a priority of one or more transmission requests.

By modifying the priority of one or more of the transmission requests, determinism can be achieved more easily for the other transmission requests if the priority of one or more transmission requests is decreased. On the other hand, determinism can also be achieved more easily for certain transmission requests, if their priority is increased.

According to another embodiment, the method can further comprise, prior to planning the transmission sequence, selecting one or more of the obtained transmission requests, preferably according to a priority of each of the transmission requests.

After selecting one or more requests of the obtained requests, the transmission sequence is created out of the selected requests only. Thereby the establishing of determinism for the selected requests is facilitated.

According to another embodiment, the coordinator device is one of the client devices acting as coordinator device.

There is no need for a dedicated coordinator device, but one of the client devices can assume the role of a coordinator. This appointment of the role can be performed by different techniques. For example, in a system with only a few additions and removals of client devices, the coordinator role could be bestowed upon the device connected the longest, while in a fast-pacing environment, the coordinator role could be bestowed upon the device connected the shortest. Other schemes of distributing the coordinator role are also possible.

According to another embodiment, during the step of obtaining transmission requests, the coordinator device controls the amount of data that is transferred from each client device via the PCIe bus.

It has been shown, that by executing full control over the amount of data that the clients can transfer during the obtaining of transmission requests, the coordinator device can ensure that all client devices can submit their transmission requests to the coordinator device. In other words, the clients write their transmission requests to the coordinator themselves, but in a limited amount and/or time. The limitation is imposed by the coordinator device.

According to another embodiment, no data is transferred via the PCIe bus in the step of planning the transmission sequence. The step of planning the transmission sequence can also alternatively or in addition comprise verifying that the requested data transfers comply to predetermined constraints. Such constraints are preferably a time-triggered schedule or rate constraints.

It has been shown to be beneficial, in order to achieve communication determinism, that no data is transferred via the PCIe bus during the planning of the transmission sequence. This means, that the transmission of data can only be executed upon being initialized by the coordinator, which delegates this task to the DMA engine.

According to another embodiment, the coordinator device manages the data on the PCIe bus in the step of fulfilling the transmission requests and can restrict the usage of the PCIe bus.

Again, with the coordinator device being in control of the data on the PCIe bus, determinism can be facilitated, since the coordinator can ensure that no other traffic detrimentally affects the transmission that shall be deterministic.

According to another embodiment, obtaining the transmission requests is performed by one or more of the following techniques:
The coordinator device can poll the transmission requests from the client devices. This means for example that the client devices have their transmission requests at stack, which is queried by the coordinator. This can be performed in intervals and/or regularly.

Alternatively, the coordinator device can read out transmission requests from the memories of the client devices. The client devices can provide the requests at certain memory positions, that the coordinator reads out. This, too, can be performed in intervals and/or regularly.

Alternatively, the client devices can send their requests as messages to the coordinator. The coordinator device then would receive the transmission requests as message from the client devices.

Alternatively, the client devices can send their requests as push information to the coordinator. The coordinator device then would receive the transmission requests as push information from the client devices.

It should be noted that other techniques are also possible, that a combination of the above techniques is also possible, and that the coordinator can accept transmission requests provided through different techniques, too.

According to another embodiment, planning the transmission sequence is performed by applying a time-triggered schedule.

It has been shown, that using a time-triggered schedule, deterministic communication can be facilitated. With a time-triggered schedule, a time at which a scheduled transmission is to be executed. By defining the start time of a transmission, determinism can also be improved.

According to another embodiment, planning the transmission sequence can comprise one or more of

Grouping the obtained transmission requests into two or more groups. One example of the grouping is to divide the obtained transmission requests into requests that refer to allowable and not feasible transmissions. For example, after receiving a request for a device, the device could have been removed from the system, and thus the requested transmission cannot be executed anymore, in other words, the transmission is not feasible anymore.

Checking whether the obtained transmission requests comply with static configuration information. One example for this could be to check whether a transmission request complies with a time-triggered schedule or rate constraint traffic configuration.

Determining invalid transmission requests out of the obtained transmission requests. Sometimes a transmission request can be invalid for other reasons, for example they are expected to take longer than a predetermined time limit or would violate a security rule that is implemented in the system. Also, a request could be determined to be invalid if not enough resources are available for the requested transfer, the maximum transfer per client is or would be exceeded, no time-triggered slot are available, the requested transmission doesn't fit into the rate-constraint traffic, or similar constraints.

Dropping one or more of the obtained transmission requests. Based on the above but also in addition, some transmission requests can be dropped in order to ensure determinism.

According to another embodiment, fulfilling the transmission requests comprises one or more of:
Reporting, by the coordinator device, to the client devices, when a transmission request is dropped or when a data transfer is invalid or incompliant. By being informed about the incompliance or the dropping of a transmission request, the clients' capability to assess re-requesting the same transmission is improved.

Acknowledging, by the coordinator device, to the client devices requesting a transmission that the data transfer was successful or dropped. Not only a request can be dropped, also the transfer can be interrupted or dropped for some reason. This, in addition to the successful termination of a transfer, can be indicated the client devices with an acknowledgement.

Removing a transmission request after fulfilment from a list of pending transmissions at the client which requested the data transfer. In one embodiment, a client can provide a list of pending transmissions, which can also be considered as a stack which is read out, as described above, by the coordinator. After fulfillment a request can be removed from this list.

Finally, informing, by the coordinator device, the client device receiving the data transfer that the data transfer is successful. The coordinator can also inform the recipient that the transfer is successful. Since it is not guaranteed that a recipient notices new data in its memory, this can possibly avoid extra checks on the recipient side and improve the overall method.

Another aspect of the present invention refers to a data control device, that is configured to perform any of the methods described above. This data control device can for example act as the coordinator device.

Another aspect of the present invention refers to a PCIe system, comprising client devices, wherein at least of the client devices is configured to perform any of the methods described above.

Another aspect of the present invention refers to a computer program product including a program for a processing device, comprising software code portions for performing the steps of any of the methods describes above when the program is run on the processing device. One embodiment thereof comprises a computer-readable medium on which the software code portions are stored, wherein the program is directly loadable into an internal memory of the processing device.

It is noted that the subject-matter of the embodiments described for the method can also be employed in the other aspects, wherein even embodiments can be combined.

### BRIEF DESCRIPTION OF THE DRAWINGS

The embodiments are illustrated in the drawings in which like reference numerals refer to like elements and in which:
- Fig. 1: shows an exemplary flowchart of the method according to the invention,
- Fig. 2: shows an exemplary arrangement of devices and a PCIe bus, and
- Fig. 3: shows a data flow diagram according to the invention.

It is noted that in the differently described embodiments, the same parts are provided with the same reference numbers or the same component designations, wherein the disclosure can be applied to the same or similar parts with the same or similar reference numbers or the same or similar component designations. The position designations in the description, such as top, bottom, side, etc., are related to the directly described and illustrated figure and these position designations can be transferred to other positions for other figures.

### DETAILED DESCRIPTION OF THE INVENTION

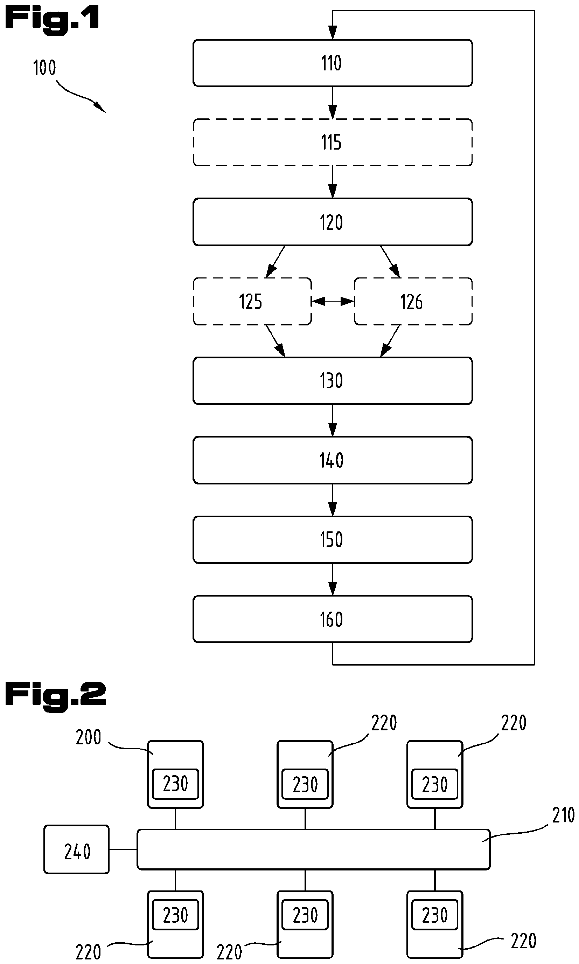

Fig. 1 shows an exemplary flowchart of the method. Therein, optional features are indicated by a dashed line. Fig. 2 shows an exemplary arrangement of devices and a PCIe bus 210 according to the present invention. It is noted that Fig. 2 shows one coordinator device 200 and five client devices 220. The number is arbitrarily chosen, and any number of devices 200, 220 of at least one can be used. Furthermore, one of the devices 200, 220 is or assumes the role of the coordinator device 200.

For simplicity, Fig. 2 only shows a setup of six devices 200, 220, whereof one is a dedicated coordinator device 200 and the five other devices are client devices 220.

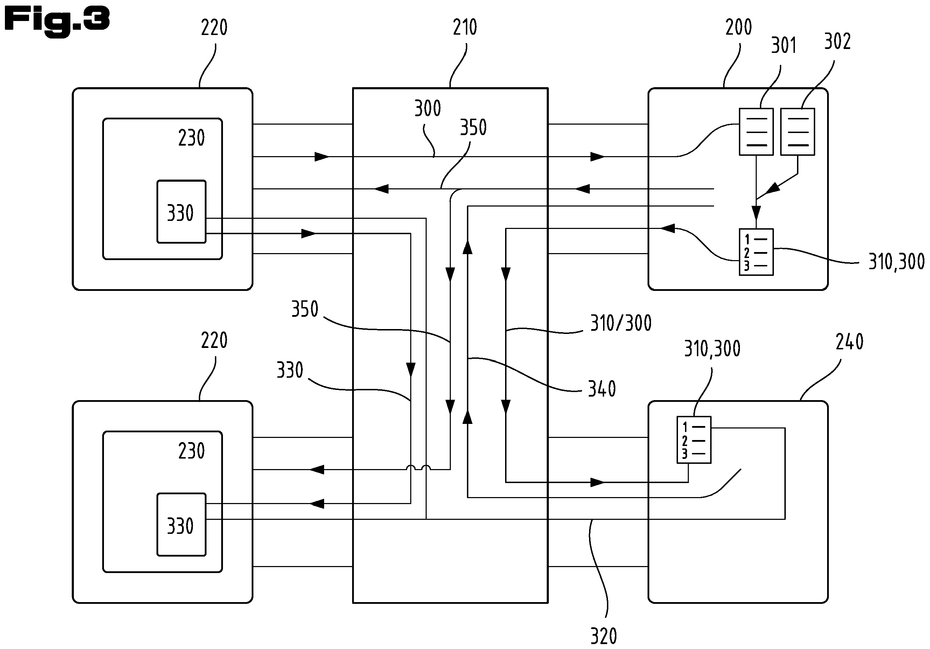

Fig. 3 shows a data flow diagram according to the present invention, where the flow of information according to one transmission request 300 is depicted. Again, coordinator device 200 is shown as dedicated coordinator in Fig. 3, but it is also possible, that one of the devices merely assumes the role of the coordinator, and otherwise functions as a client device 220, too. That means, that it not only coordinates the PCIe communication, but also sends and receives data similar to a common client device 220.

Since all figures basically interleave in their subject-matter, the invention is described on the basis of all figures.

In the presented method and devices, a coordinator device 200, or coordinator host, and client devices 220, or client hosts, are connected via a PCIe bus 210. The coordinator host 200 has full control over the usage of the PCIe bus 210.

It is noted that there is no need for a dedicated coordinator device 200, but from several connected client devices 220, one can assume the role of the coordinator device 200.

The method, controlled by the coordinator device 200, will cyclically execute the phases of the method 100.

First the coordinator device 200 obtains 110 transmission requests 300 from the client devices 220.

Generally, client devices 220 can post transmission requests 300 at any time to the coordinator device 220. Also, transfer data 330, payload of a transmission can be stored at any time in the memory 230 of a client device. 220.

The obtaining 110 of the transmission requests 300 by the coordinator device 200 can be achieved in various ways. The coordinator device 200 can poll the transmission requests 300 from the client devices 220, which e.g. can store all transmission requests 300 in a stack, which is queried by the coordinator 200. This can be performed in intervals and/or regularly. The following alternatives techniques are mentioned exemplary, as described above already. Alternatively, the coordinator device 200 can read out transmission requests 300 from the memories 230 of the client devices 220. Alternatively, the client devices 220 can send their requests 300 as messages to the coordinator 200. Alternatively, the client devices 220 can send their requests 300 as push information to the coordinator 200. Other techniques and combinations of these are also possible.

Fig. 3 shows the transmission of a request 300 from the upper client device 220 to the coordinator device 200. All requests 300 that are obtained in the cycle are stored as obtained transmission requests 301 in the coordinator 200.

Generally, data transfers 320 are between client devices 220, but the coordinator device 200 can act as a client device as well.

The coordinator 200 obtains 110 the transmission requests 300 during the step of obtaining, but a requested data transfer 320 can also take the form other than a non-posted PCIe read transaction. However, it is important that the coordinator has control over any data transfers on the PCIe bus 210.

After concluding the step of obtaining 110, the coordinator 200 is aware of all pending transmission request 300 between all clients 220, that means after collecting all transmission requests 300, the coordinator is enabled to organize the transmission requests 300 and produce an optimized transmission schedule or sequence 310 in the step of planning 120.

Optionally, at this stage, the coordinator device 200 can select 115 one or more transmission requests 300 for planning 120 the transmission sequence 310. The selection can for example be based on a priority which a transmission request 300 can carry. The priority can also be derived from other information included in or attached to a transmission request 300 like an application or usage of the transfer data 330. For example, video related data can be prioritized, or maintenance transfers can be de-prioritized. The selection can also be based on the source or target device, the data amounts of transfers, a request time, or a desired transfer time. Other criteria are also possible.

It is also possible that the transmission sequence 310 is designed to cover only a certain throughput rate on the PCIe bus 210, or to last only a predetermined time, or to only transmit a certain predetermined amount of data.

In such cases, the coordinator 200 would select requests 300 based on the selection criteria only until the criteria are fulfilled and proceed with the selected transfer requests 300 only.

All these selections can be based on a comparison of transfers or absolute, i.e., threshold values.

It is noted that the amount of data put on the PCIe bus 210 can be limited by the coordinator 200, which triggers all data transfers 320 on the bus 210.

It is also possible, that after the next step 120, i.e., after the transmission sequence 310 is finished, the sequence would be cutoff at a certain point, up to which the criteria are fulfilled.

During the step of planning 120, data transfer over the PCIe bus can be halted, but could also be continued. It is also possible to operate several coordinators 200. In this case, the coordination of the several coordinators 200 could be implemented by one of the following techniques: The coordinators 200 could periodically accept incoming transmission requests 300 and take turns, such that continuous operation can be facilitated. Alternatively, other multiplex methods can be applied, like time-division multiplexing. Also, only one coordinator could be actively in a working state, whereas others are in a stand-by state, as failover or back-up devices. Further, complex bus topologies can be used, such that several coordinators can transfer data simultaneously, at least partly. In that fashion, the coordinator role 200 could be passed on throughout the client devices 220, too.

It is also noted that the inventive techniques can also be be employed in an arrangement like a complex network topology. This could encompass several groups of coordinators and clients. The groups could then communicate with each other either by designating one or more coordinators in each group that communicate with the designated coordinators of the other groups, or in that client devices communicate with coordinators of some or all groups. Also a combination of these two variants is possible. The communication flows of the groups could additionally be synchronized, which results in a more efficient communication with improved determinism and lower latency.

In this step 120, the coordinator 200 not only uses the obtained transmission requests 301 for planning 120 the transmission sequence 310, but also static configuration information 302, which is already stored in the coordinator device 200. As stated above, static configuration information 302 in the context of this document refers to information of predetermined constraints that indicate to a specific software application, a certain time triggered setup or a rate-constraint configuration.

The planning 120 can comprise grouping the obtained transmission requests 300 into two or more groups. As laid out above, this can divide the requests 300 into requests 300 that refer to allowable and not feasible transmissions. A transmission could be held to be not feasible, if for example the desired target device 220 was removed from the system. The planning 120 can then exemplary proceed only with allowable requests.

Planning 120 can also comprise checking whether the obtained transmission requests 301 comply with static configuration information 302. That way, a request for a data transfer 320 that could not be finished within a certain time limit can be disregarded from the sequence 310.

Also determining invalid transmission requests 300 out of the obtained transmission requests 301 can be comprised in the planning 120. A transfer 320 could be considered to be invalid if the requesting client 220 has reached a quota of allowed transmissions for example.

Planning 120 could also comprise dropping one or more of the obtained transmission requests 301. This can be done in order to ensure determinism.

From the obtained transmission requests 301, or a selection 115 out of them, or from the remainder of the requests, as detailed above, and the static configuration information 302, the coordinator then plans the transmission sequence 310. This sequence 310 indicates the order, in which the transmission requests 300 of the client devices 220 are to be fulfilled.

Optionally, after planning 120 the transmission sequence 310, the coordinator can modify 125 priorities of the transmission requests 300. By modifying 125 the priority of one or more of the transmission requests 300, determinism can be achieved more easily for the other transmission requests.

Also optionally, but also possibly in addition to the modifying 125, the step of planning 120 the transmission sequence 310 can also comprise verifying 126 that the requested data transfers 320 comply to predetermined constraints. Such constraints are preferably a time-triggered schedule or rate constraints. As stated above, after the transmission sequence 310 is planned, the coordinator 200 can still apply conditions on the sequence 310, such that a predetermined threshold, like time, data, etc., is not exceeded.

Data transfers 320 can optionally also be combined, if for example they have the same source and the same target.

In the step of planning 120, the coordinator 200 can also enforce a time-triggered schedule for the following steps. To affect this, the coordinator 200 can ensure that the transmission requests 300 of client devices 220 that are included into the sequence 310 follow a time-triggered schedule. Again, if a transmission request 300 violates the time-triggered schedule, the coordinator can disregard the request from the sequence 310 in the current cycle, and altogether drop the request or leave it pending to be considered in one of the upcoming cycles.

As stated above, optionally, no data is transferred via the PCIe bus 210 during the step of planning 125 the transmission sequence 310. The coordinator 200 can verify that the data 330 to be transferred during the following steps of the cycle conforms to a time-triggered schedule or fulfills other desired properties like the static configuration information 302 (e.g., rate constraints).

In the next step, the coordinator 200 transmits 130 the transmission sequence 310 and the transmission requests 300 of the transmission sequence 310 to a direct-memory-access, DMA, engine 240. The coordinator 200 thereby instructs the DMA engine 240 to execute the data transfers 330 that have been requested by the transmission requests 300 in the order of the transmission sequence 310.

In another implementation one or mor of the client devices 220 can also fulfil the functions of DMA engines, or can instantiate a DMA engine, that is call a routine that creates an instance of a DMA engine 240. The coordinator 200 then can assigns temporary control to one or many of the DMA engines 240 present in the system.

With this in mind, it is noted that just like one or more of the client devices 220 can assume the role of the coordinator 200, one or more of the client devices 220 can also assume the role of the DMA engine 240. So, there is no requirement that a dedicated DMA engine 240 is present in the system. Also, the coordinator 200, or the client device 220 that assumes the role of the coordinator 200, can also, additionally, assume the role of a DMA engine 240. In that case, the coordinator 200 can instruct client devices 220 to initiate data transfers 320.

By transmitting 130 the transmission sequence 310 to the DMA engine 240, the coordinator device 200 programs the DMA engine (or engines) to execute the transfers 320 following the results of the planning 120 step, that is the sequence 310.

As stated above, the coordinator 200 will not transmit 130 requests that have been dropped or otherwise to be found invalid, because e.g. a requested transfer 320 violates the time-triggered schedule.

The DMA engine 240, or the device 200, 220 that assumed the role of a DMA engine 240, then proceeds to fulfilling 140 each of the transmission requests 300 in the order of the transmission sequence 310 by performing the corresponding data transfer 320 by memory-to-memory transmission, which is implemented by the DMA engine 240 accessing the memory 230 of the source device 220, reading the transfer data 330 and accessing the memory 230 of the target device 220 and writing the transfer data 330. By reading and writing the transfer data 330 from and to the memories 230 the DMA engine performs the data transfer 320 and thus fulfils the corresponding transmission request 300.

The DMA engine 240 fulfils, in this fashion, all the transmission requests 300 of the transmission sequence 310. Fig. 3 shows data transfer 320 which is controlled by the DMA engine 240 and reads the data 330 from memory 330 of the upper device 220 and writes the data 330 into the memory 230 of the lower device 220.

During the fulfilment 140 of the requests 300, the coordinator 200 can monitor the communication on the PCIe bus 210 and thus detect and report if a condition is violated, like e.g. an enforced time-triggered schedule.

After processing the sequence 310 and fulfilling 140 all transmission requests 300 of the sequence 310, the DMA engine 240 sends 150 an acknowledgment 340 to the coordinator device 200, that indicates that the transmission requests 300 of the transmission sequence 310 have been fulfilled.

In the next step, the step of informing 160, the coordinator device 200 informs the respective client devices 220, that is the source and the target devices, of the execution of the data transfers 320, and thereby of the fulfilment of the corresponding transmission requests 300.

Every successful data transfer 320 is thereby acknowledged to the client who posted the corresponding transmission request 300 and to the recipient of the transferred data 330. The coordinator 200 can then also remove the corresponding request 300 from the list of pending transmission requests by the respective client device 220.

It is noted that the coordinator can also inform the client devices in this step of all the other statuses or status changes of transmission requests 300 or data transfers 320. For example, if a priority was modified 125, whether a specific transmission request 300 was selected 115 in this cycle or not, whether a data transfer 320 was verified 126 to be compliant, whether a transmission request 300 was dropped, or whether a data transfer failed, etc.

The method 100 would then repeat by entering the next cycle and start over from the beginning.

As an alternative, similar to the obtaining 110, in the step of fulfilling 140 the data transfers 320 can also take the form other than a non-posted PCIe read transaction. The coordinator 200 can also instruct a client device 220 to transfer data using a PCIe posted-write transaction. The client device 220 then would execute the transmission using posted-write transactions (possibly still using a DMA engine present in the system). In this case, the client device would also inform the coordinator device 200 about the completion of the data transfer 320.

Also, there is another solution in that the fulfilling the transmission requests can be implemented as follows:
The coordinator instructs one or more client devices to perform a PCIe posted-write transaction. A posted-write transaction does not wait for a write completion response to indicate success or failure of the write transaction. The instructed clients then perform the PCIe posted-write transaction to effect the data transfer, and then - without waiting from a confirmation from the recipient - confirm to the coordinator device after completion of the data transfer. In other words, more generally, a client can take on the role of the DMA engine. this client can use the DMA engine shown, or have its own, i.e. another DMA engine, or carry out the transfer through programmed access, that is without direct-memory access. With this modification, additional time can be saved in the method.

It is noted that all features disclosed herein can be implemented as computer-implemented method but also as hardware.

Thus, another aspect of the present invention refers to a data control device 200, configured to perform any embodiment of the method 100, as described above.

Further, another aspect of the present invention refers to a PCIe system, comprising client devices, wherein at least one of the devices is configured to perform any embodiment of the method 100 as described above.

A further embodiment is a computer program product with a program for a data processing device, comprising software code sections for executing the steps of the method described above when the program is executed on the data processing device.

This computer program product can comprise a computer-readable medium on which the software code sections are stored, wherein the program can be loaded directly into an internal memory of the data processing device.

The exemplary embodiments show possible implementation variants, whereby it should be noted at this point that the invention is not limited to the specifically described design variants, but rather various combinations of the individual features with one another are possible. In particular, the features described in context of the method can also be included into the device.

The scope of protection is determined by the claims. However, the description and the drawings are to be used to interpret the claims.

Individual features or combinations of features from the different exemplary embodiments shown and described can represent independent inventive solutions. The object on which the independent inventive solutions are based can be found in the description.

All information on value ranges in the present description are to be understood in such a way that they include any and all sub-ranges thereof, e.g. the information 1 to 10 is to be understood in such a way that all sub-ranges, starting from the lower limit 1 and the upper limit 10, are also included, i.e. all sub-ranges begin with a lower limit of 1 or greater and end at an upper limit of 10 or less, for example 1 to 1.7, or 3.2 to 8.1, or 5.5 to 10.

### LIST OF REFERNCE SIGNS

- 100: Method
- 110: Obtaining
- 115: Selecting
- 120: Planning
- 125: Modifying
- 126: Verifying
- 130: Transmitting
- 140: Fulfilling
- 150: Sending
- 160: Informing
- 200: Coordinator device
- 210: PCIe bus
- 220: Client devices
- 230: Memory
- 240: Direct-memory-access, DMA, engine
- 300: Transmission request
- 301: Obtained transmission requests
- 302: Static configuration information
- 310: Transmission sequence
- 320: Data transfer
- 330: Transfer data
- 340: Acknowledgement
- 350: Fulfillment information

## Claims

1. Computer-implemented method (100) for providing deterministic transfer of information from one memory (230) to another memory (230) via a PCIe bus (210), wherein the PCIe bus (210) is connecting one or more client devices (220) and at least one coordinator device (200), wherein the coordinator device (200) has full control over the usage of the PCIe bus (210), the method comprising performing the following steps repeatedly:
obtaining (110) transmission requests (300) at the coordinator device (200) from all connected client devices (220), wherein a transmission request (300) is a request of one of the client devices (220) to transfer data (330) to another client device (220) or the coordinator device (200);
planning (120) a transmission sequence (310), by the coordinator device (200), based on one or more the obtained transmission requests (300, 301) and static configuration information (302), wherein the transmission sequence (310) indicates an order in which the transmission requests (300) of the client devices (220) are to be fulfilled;
transmitting (130) the transmission sequence (310) and the transmission requests (300) of the transmission sequence (310) from the coordinator device (200) to a direct-memory-access engine (240);
fulfilling (140) each of the transmission requests (300) in the order of the transmission sequence (310) by performing the corresponding data transfer (320) by memory-to-memory transmission by the direct-memory-access engine (240), accessing the memories (230) of the source and target devices (220) of the data transfers (320);
sending (150) an acknowledgment (340) by the direct-memory-access engine (240) to the coordinator device (200), that the transmission requests (300) of the transmission sequence (310) have been fulfilled; and
informing (160), by the coordinator device (200), the respective client devices (220) of the fulfilment of the corresponding transmission requests (300).

2. Computer-implemented method (100) according to any one of the previous claims, wherein planning (120) the transmission sequence (310) comprises modifying (125) a priority of one or more transmission requests (300).

3. Computer-implemented method (100) according to any one of the previous claims, further comprising, prior to planning (120) the transmission sequence (310), selecting (115) one or more of the obtained transmission requests (300, 310), preferably according to a priority of each of the transmission requests (300).

4. Computer-implemented method (100) according to any one of the previous claims, wherein one or more of the client devices (220) are acting as coordinator device (200) and/or DMA engine (240).

5. Computer-implemented method (100) according to any one of the previous claims, wherein in the step of obtaining (110) transmission requests (300), the coordinator device (200) controls the amount of data that is transferred from each client device (220) via the PCIe bus (210).

6. Computer-implemented method (100) according to any one of the previous claims, wherein in the step of planning (120) the transmission sequence (310) no data is transferred via the PCIe bus (210), and/or wherein the step of planning (120) the transmission sequence (310) comprises verifying (126) that the requested data transfers (320) comply to predetermined constraints, preferably to a time-triggered schedule or rate constraints.

7. Computer-implemented method (100) according to any one of the previous claims, wherein in the step of fulfilling (140) the transmission requests (300) the coordinator device (200) manages the data on the PCIe bus (210) and can restrict the usage of the PCIe bus (210).

8. Computer-implemented method (100) according to any one of the previous claims, wherein obtaining (110) the transmission requests (300) is performed by one or more of:
polling, by the coordinator device (200), the transmission requests (300) from the client devices (220);
reading, by the coordinator device (200), the transmission requests (300) from the memories (230) of the client devices (220);
receiving, by the coordinator device (200), the transmission requests (300) as message from the client devices (220); and
receiving, by the coordinator device (200), the transmission requests (300) as push information from the client devices (220).

9. Computer-implemented method (100) according to any one of the previous claims, wherein planning (120) the transmission sequence (310) is performed by applying a time-triggered schedule.

10. Computer-implemented method (100) according to any one of the previous claims, wherein planning (120) the transmission sequence (310) comprises one or more of:
grouping the obtained transmission requests (300, 301) into two or more groups;
checking whether the obtained transmission requests (300, 301) comply with static configuration information (302);
determining invalid transmission requests (300) out of the obtained transmission requests (301); and
dropping one or more of the obtained transmission requests (300, 301).

11. Computer-implemented method (100) according to any one of the previous claims, wherein fulfilling (140) the transmission requests (320) comprises one or more of:
reporting, by the coordinator device (200), to the client devices (220), when a transmission request (300) is dropped or when a data transfer is invalid or incompliant;
acknowledging, by the coordinator device (200), to the client devices (220) requesting a transmission that the data transfer (320) was successful or dropped;
removing a transmission request (300) after fulfilment from a list of pending transmissions at the client device (220) which requested the data transfer; and
informing, by the coordinator device (200), the client device (220) receiving the data transfer (320) that the data transfer (320) is successful.

12. Data control device (200), configured to perform the method (100) of any one of claims 1 to 11.

13. PCIe system, comprising client devices (220), wherein at least one of the client devices (220) is configured to perform the method (100) of any one of claims 1 to 11.

14. Computer program product including a program for a processing device, comprising software code portions for performing the steps of any one of claims 1 to 11 when the program is run on the processing device.

15. Computer program product according to claim 15, wherein the computer program product comprises a computer-readable medium on which the software code portions are stored, wherein the program is directly loadable into an internal memory of the processing device.
